# EUROPEAN PATENT APPLICATION

(11) **EP 3 037 612 A1**
(43) Date of publication of application: **29.06.2016**
(21) Application number: 15198691.6
(22) Date of filing: 09.12.2015
(51) Int. Cl.: E05D 15/06, F16B 5/02, F16B 43/00, E05D 7/04

(54) **DOOR MOUNTING SYSTEM**

(30) Priority: 22.12.2014 SE 1451631
(71) Applicant: Assa Abloy Entrance Systems AB, 261 22 Landskrona (SE)
(72) Inventor: ÅSBO, Sven, 256 57 Ramlösa (SE); KHOSDHAST, Abbas, 253 74 Helsingborg (SE); AHLQVIST, Ola, 261 92 Härslöv (SE)
(74) Representative: Zacco Sweden AB

(57) **Abstract**

The present invention involves a door mounting system for mounting a door system to a structure, such as a wall, a ceiling or a frame, wherein the door mounting system comprises a first part that is adapted to be mounted to the structure and comprising at least one circular through hole, at least one adjustment means comprising a circular washer comprising a long hole, wherein the outer diameter of the circular washer corresponds to the inner diameter of the through hole of the first part, and a fastening means, wherein the circular washer is rotatably mountable in the circular through hole of the first part and the fastening means is insertable in the long hole of the circular washer to interact with the first part, the adjustment means and the structure to mount the door system to said structure.

## Description

### TECHNICAL FIELD

A door mounting system for mounting a door system to a structure, such as a wall or a ceiling.

### BACKGROUND ART

Door systems, such as a revolving door system or a sliding door system, are mounted to a structure to operate a door in an opening. It is important that the door system is mounted correct and level in relation to the structure so that the door system could function in the intended way. It is also important from an esthetical point of view that the door system is mounted in an intended manner. As some door systems are over a meter long, even a small offset angle of the door system will be visible to the persons passing through the door.

The structures that the door system is mounted on are of different material such as brick wall, concrete, metal etc. The holes in the structures that the screws that holds up the door system are inserted in are first marked and thereafter pre drilled. The marking of where the holes should be located are done through the holes in the door system as the door system are positioned in the intended position, by measuring or by using a template. When drilling the holes it is common that the drill drifts in the structure and that the drilled hole becomes located offset in view of its intended position. The offset position of the holes makes it difficult for the installer to mount the door system in a correct way in accordance with the above identified requirements.

The positioning of door systems are often such as the space that the installer should work in are restricted, due to that the door system should be located close to a transition from a ceiling to a wall or due to that the door system as such are really optimizes.

Thus, there exists a need for an improved door mounting system for mounting of door systems.

### SUMMARY OF THE INVENTION

One object of the present invention is to overcome one or more of the above drawbacks.

Another object of the present invention is to achieve a door mounting system that enables mounting of a door system in a correct position even if the holes in the structure are offset in view of their intended position.

Another object of the present invention is to achieve a door mounting system that can be produced with lower demand on the tolerances.

These and further objects are achieved by means of a door mounting system as claimed in the associated independent claims, preferred variants thereof being defined in the associated dependent claims.

The door mounting system according to the independent claim comprises a a door mounting system for mounting a door system to a structure, such as a wall, a ceiling or a frame, wherein the door mounting system comprises a first part that is adapted to be mounted to the structure and comprising at least one circular through hole, at least one adjustment means comprising a circular washer comprising a long hole, wherein the outer diameter of the circular washer corresponds to the inner diameter of the through hole of the first part, and a fastening means, wherein the circular washer is rotatably mountable in the circular through hole of the first part and the fastening means is insertable in the long hole of the circular washer to interact with the first part, the adjustment means and the structure to mount the door system to said structure. The door mounting system enables that the door system could be mounted in a correct and intended position even if the holes in the structure has been positioned offset in relation to where they should and that the position of the door system on the structure could be adjusted.

According to an aspect, the depth of the circular through hole of the first part is larger than the thickness of the circular washer.

In an aspect, the adjustment means further comprise a flange that is adapted to interact with an upper rim of the circular through hole.

In an aspect, the flange is connected to the side of the circular washer that is directed away from said structure when the washer is mounted in the circular through hole of the first part. In an aspect, the flange is an annular flange. In an aspect, the outer diameter of the annular flange is larger than the diameter of the circular through hole of the first part.

In an aspect, the fastening means is a screw.

In an aspect, the adjustment means further comprise a ring and the outer diameter of the ring is the same as the outer diameter of the circular washer. In an aspect, one end of the ring is connected to the flange and the other end of the ring is connected to the circular washer.

In an aspect, the depth of the circular through hole of the first part is larger than the thickness of the circular washer and the height of the ring.

In an aspect, the circular washer, the flange and the ring of the adjustment mean are integrated. In an aspect, the adjustment means has a cap shape.

In an aspect, the long hole of the circular washer has a length and a width and the length is larger than the width.

In an aspect, the length of the long hole is substantially the same as the radius of the circular washer.

In an aspect, the long hole extends in the radial direction of the circular washer from the centre of the circular washer towards the periphery of the circular washer.

In an aspect, the width of the head of the screw is larger than the width of the long hole.

In an aspect, the height of the ring of the adjustment means is larger than the height of the head of the screw.

The method for mounting a door system to a structure, such as a wall, a ceiling or a frame, wherein the door system comprise a door mounting system, according to the independent claim comprise positioning the first part at the structure where it should be mounted, drilling a hole in the structure at each through hole of the first part, mounting an adjustment means in each through hole of the first part, rotating each adjustment means in the through hole, such that the long hole of the adjustment means is aligned with the drilled hole, and inserting a fastening means in each long hole and thereto corresponding drilled hole to fastening the first part to the structure. The method enables that the door system could be mounted in a correct and intended position even if the holes in the structure has been positioned offset in relation to where they should and that the position of the door system on the structure could be adjusted.

In an aspect, the position in which the holes are drilled are marked at the structure (4) through the through hole of the first part.

In an aspect, the position of the first part is adjusted in relation to the structure after the fastening means is inserted into the long hole of the first adjustment means and thereto corresponding drilled hole by rotating the adjustment means.

In an aspect, the position of the first part is adjusted in relation to the structure after the first fastening means is inserted into the long hole and thereto corresponding drilled hole and before a second fastening means is inserted into the long hole and thereto corresponding drilled hole by moving rotating the first part around said first fastening means.

In an aspect, the number of through holes in the first part is dependent on the length of the first part.

### BRIEF DESCRIPTION OF THE DRAWINGS

The invention will be described in more detail with reference to the accompanying drawings, in which:
Figure 1 is a perspective view of a door system with a sliding door.
Figure 2 is a perspective view of a part of a door mounting system.
Figure 3 is a perspective view of an adjustment means.
Figure 4 is a cross sectional view of a door mounting system along the line A-A in fig 2.
Figure 5 is a perspective view of a first part of a door mounting system
Figure 6 is a view from above of an adjustment means of a door mounting system.
Figure 7 is a view from the side of the adjustment means in figure 6.
Figure 8 is a cross sectional view of the adjustment mean along the line B-B in figure 6
Figure 9 is a perspective view of an adjustment means of a door mounting system.

### DETAILED DESCRIPTION

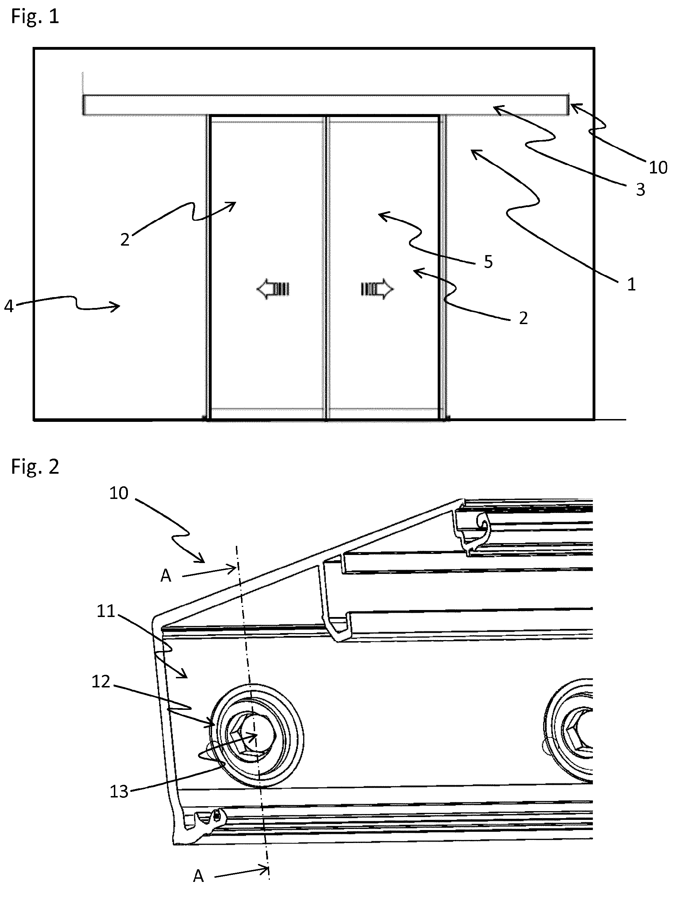

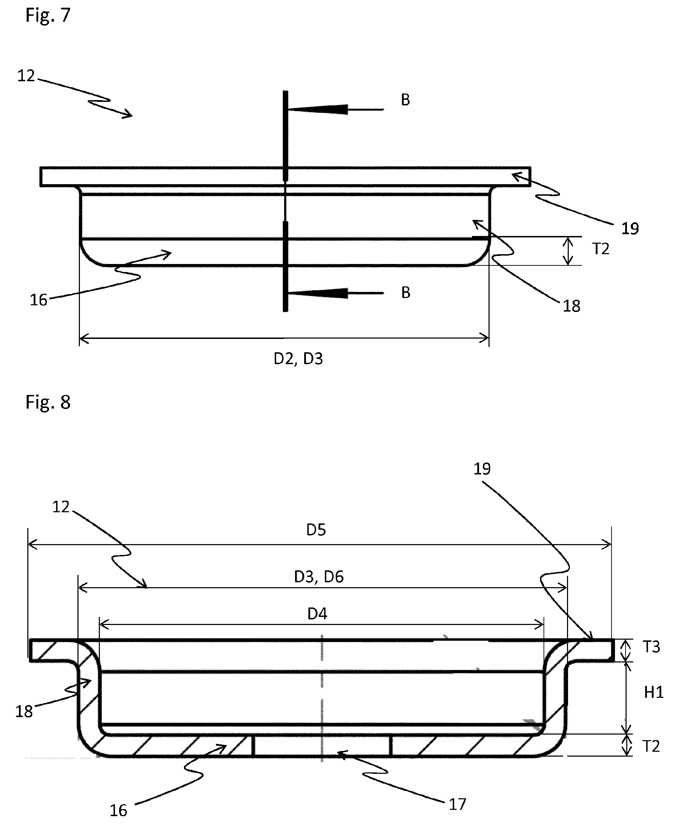

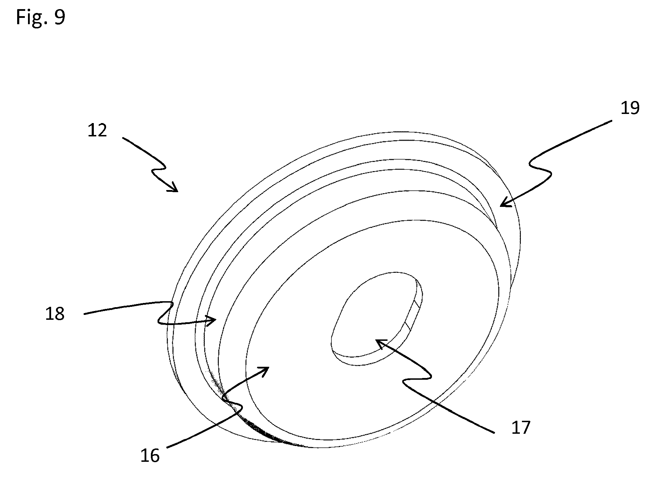

Figures 1 to 9 disclose a door mounting system 10 according to the invention.

In fig. 1 a sliding door system 1 is disclosed. The door system 1 comprise door leafs 2 and a door operating means 3. The door operating means 3 operates the door by opening and closing the door leafs 2. The door system 1 is mounted to a structure 4 at an opening 5 in the structure 4. The door system 1 regulates the entrance through the opening 5 in the structure 4 by opening and closing the doors 2.

In an aspect, the door system could be many different kind of doors, it could for instance be a revolving door, a swing door opener or a swing door closer.

In an aspect, the structure 4 could be a wall, a ceiling or a frame. The structure 4 could thus be made of many different materials that is common knowledge and will thus not be described in more detail herein.

The door system 1 is mounted to the structure 4 via a door mounting system 10. The door mounting system 10 comprise a first part 11, adjustment means 12 and fastening means 13.

The first part 11 is a frame on which the parts of the door system 1 are mounted on. The first part 11 comprises three circular through holes 14. The circular through holes 14 are located in the area of the first part 11 that is intended to be facing the structure 4 when the door system 1 is mounted to the structure 4. The circular through holes 14 has an inner diameter D1. The depth T1 of the circular through holes 14 is the same as the thickness T1 of the first part 11 in the area of said circular through holes 14. The first part 11 has a annular rim 15 at each circular through hole 14. The rim 15 is the area of the first part 11 at the circular through holes 14 on the side of the first part 11 that is intended to be directed away from the structure 4.

In an aspect, the number of circular through holes 14 in the first part 11 is in relation to the length of the first part 11. The number of circular through holes 14 is at least one.

The frame as such is well known and the shape of the frame will thus not be described in more detail herein.

In an aspect, the first part 11 can be a separate mounting part that is mounted to the structure 4. The frame of the door system is then mounted to said mounting part to mount the door system to the structure 4.

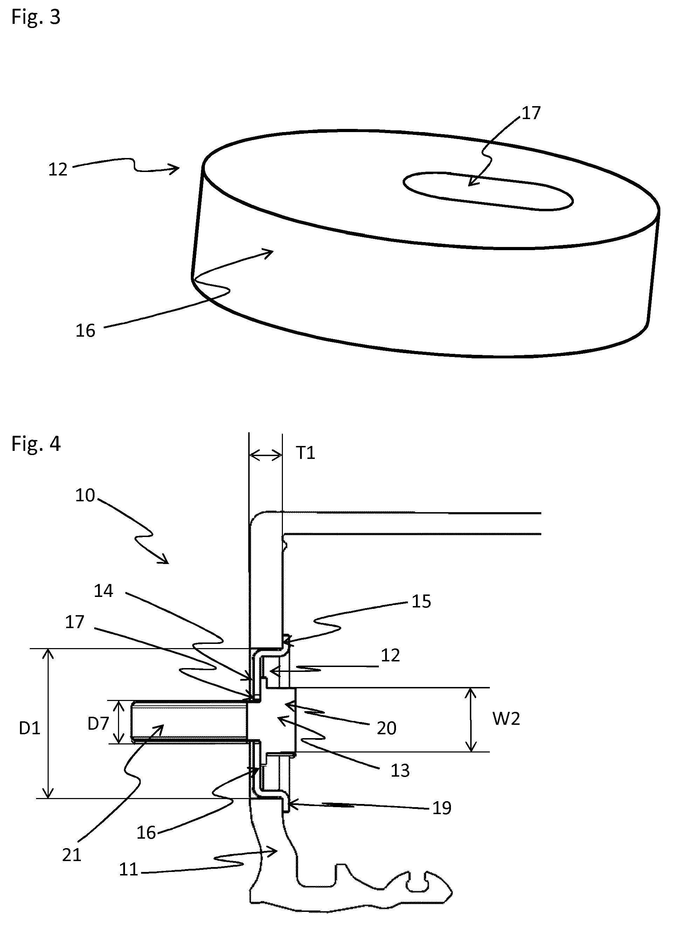

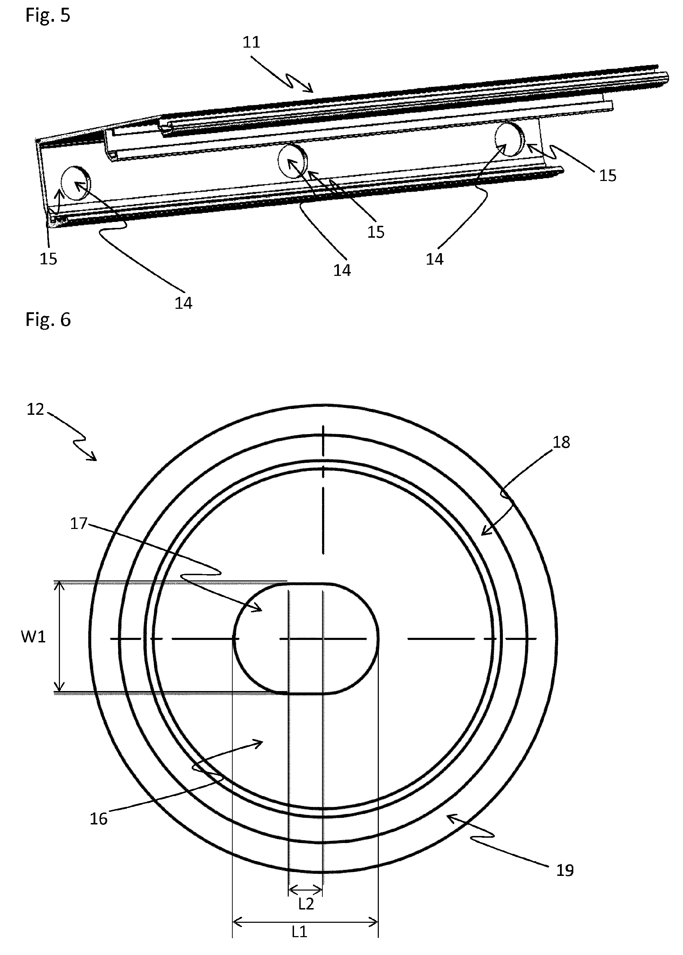

In an aspect, see fig 3 and 5, the adjustment means 12 comprise a circular washer 16. The circular washer 16 has a circular shape. The circular washer 16 has an outer diameter D2. The circular washer 16 has a thickness T2. The circular washer 16 has a long hole 17. The long hole 17 has a width W1 and a length L1. The long hole 17 is a through hole. The depth T2 of the long hole 17 is the same as the thickness T2 of the circular washer 16. The length L1 of the long hole 17 extends from the center of the circular washer 16 towards the periphery of the circular washer 16. The length L1 of the long hole 17 extends in the direction of the radius of the circular washer 16.

In an aspect, the long hole 17 has the shape of two half circles at a distance L2.

The diameter D2 of the circular washer 16 are in relation to the inner diameter of the through hole 14. The circular washer 16 can be mounted in the circular through hole 14 of the first part 11. The circular washer 16 is rotatable in the circular hole 14 around its central axis. The diameter D2 of the circular washer 16 is substantially the same as the inner diameter of the circular through hole 14. The diameter D2 is smaller than the diameter of the circular through hole 14 such that it is mountable in the circular through hole 14.

In an aspect, the peripheral shape of the circular washer 16 could be other than strictly circular as long as the shape admits that the circular washer 16 is rotatable mountable in the circular through hole 14 and can interact with the circular through hole 14 of the first part 11.

In an aspect, the adjustment means 12 further comprise a flange 19. The circular washer 16 and the flange 19 can be an integrated part or separate parts that are connected. The flange 19 has an annular shape. The annular shape has an outer diameter D5 and an inner diameter D6. The width W2 of the flange 19 is half the difference between the outer diameter D5 and the inner diameter D5 of the flange 19. The flange 19 has a thickness T3. The outer diameter D5 is larger than the diameter D1 of the circular through hole 14. The inner periphery of the flange 19 is connected to the circular washer 16.

In an aspect, the flange 19 can have other shapes, such as square, triangular or hexagonal. The flange 19 can be located along the whole rim 15 of the circular through hole 14.

In an aspect, the flange 19 can be located along parts of the rim 15 of the circular through hole 14.

In an aspect, the adjustment means 12 comprises a flange 19 and a ring 18. The circular washer 16, the ring 18 and the flange 19 can be an integrated part or separate parts that are connected. The adjustment means 12 has a cap shape.

In an aspect, the flange 19 of the adjustment means 12 is adapted to interact with an upper rim 15 of the circular through hole 14.

The ring 18 has a height H1. The ring 18 has an outer diameter D3 and an inner diameter D4. The outer diameter D3 of the ring 18 is the same as the diameter D2 of the circular washer 16. In one end the ring 18 is connected to the circular washer 16 and in the opposite end the ring 18 is connected to the flange 19. The ring 18 is connected to the circular washer 16 such that the outer diameter D3 of the ring 18 is aligned with the outer diameter D2 of the circular washer 16. The inner diameter D6 of the flange 19 corresponds to the inner diameter D4 of the ring 18. The inner diameter D6 of the flange 19 corresponds to the inner diameter D4 of the ring 18. The inner periphery of the flange 19 is connected to the ring 18.

In an aspect, the length of the long hole 17 is substantially the same as the radius of the circular washer 16.

In an aspect, the long hole 17 extend in the radial direction of the circular washer 16 from the centre of the circular washer 16 towards the periphery of the circular washer 16.

In an aspect, the fastening means 13 is a screw 13. A screw as such is well known and will thus not be described in more detail herein. The wording screw shall also comprise wording of fastening means 13 such as bolts.

In an aspect, the fastening means 13 comprise a screw head 20 and a threaded part 21.

The major diameter D7 of the threaded part of the fastening means 13 is adapted to the width of the long hole 17 of the adjustment means 12.

In an aspect, the width W2 of the screw 13 head of the fastening means 13 is larger than the width W1 of the long hole 17.

In an aspect, the width W2 of the screw head of the fastening means 13 is larger than the width W1 of the long hole 17 and smaller than the inner diameter of the ring 18 of the adjustment means 12.

In an aspect, the height of the screw head 20 of the fastening means 13 is smaller than the height of the ring 18, such that the screw head 20 can be counter sunk in the adjustment means 12.

In an aspect, the width W2 of the screw head 20 of the fastening means 13 is larger than the diameter D1 of the circular through hole 14 of the first part 11.

In an aspect, the fastening means 13 further comprise a second washer. The outer diameter of the second washer is larger than the width W1. In an aspect, the outer diameter of the second washer is larger than the width W1 of the long hole 17 and smaller than the inner diameter of the ring 18 of the adjustment means 12. In an aspect, the outer diameter of the second washer 20 is larger than the diameter D1 of the circular through hole 14 of the first part 11.

In an aspect, the depth T1 of the circular through hole 14 of the first part 11 is larger than the thickness T2 of the circular washer 16 of the adjustment means 12. When the circular washer 16 is mounted in the circular through hole 14 and the fastening means 13 presses against the circular washer 16, the circular washer 16 can flex in the circular through hole 14.

In an aspect, the depth T1 of the circular through hole 14 of the first part 11 is larger than the sum of the thickness T2 of the circular washer 16 and the height H1 of the ring 18 of the adjustment means 12. When the circular washer 16 is mounted in the circular through hole 14 and the fastening means 13 presses against the circular washer 16, the circular washer 16 can flex in the circular through hole 14.

Hereafter, a method for mounting a door system with a door mounting system 10 to a structure 4 is described. The first step that an installer that should use the door mounting system 10 do is to decide where and how on the structure 4 the door system should be mounted. Thereafter the positions of the holes in which the fastening means 13 should be inserted are located and indicated. One way of doing this is to hold the first part 11 in the position in which it should be mounted and mark the positions of the through hole on the structure 4 through the through holes. Another way of doing this is to measure the first part 11 and thereafter do the corresponding measuring on the structure 4. A third way of doing this is to use a template. The number of circular through holes 14 in the first part 11 is based on the material of the structure 4, the weight of the door system and the size of the door system.

When the positions are identified the holes are drilled in the structure 4 in the indicated positions. When drilling the holes it is common that the drill drifters away a distance due to the material in the structure 4 or due to the installer. Thus, the drilled holes in the structure 4 can be located at a distance from where they were intended and indicated to be.

The adjustment means 12 are mounted in the circular through holes 14 by inserting the circular washer 16 of an adjustment means 12 into each circular through hole 14.

The first part 11 is held in the position where it should be mounted to the structure 4. One of the adjustment means 12 is thus now located at the corresponding drilled hole in the structure 4. If that drilled hole is located at a distance from where it were intended and indicated to be and that said distance is smaller than the length of the long hole 17 of the circular washer 16, the circular washer 16 is rotated in the circular through hole 14 until the drilled hole are aligned with the long hole 17. Thereafter the fastening means 13 is inserted in the long hole 17 of the adjustment means 12 and into the drilled hole of the structure 4. The fastening means 13 interact with the adjustment means 12 and the first part 11 to mount the first part 11 to the structure 4.

In an aspect, when an adjustment means 12 with a flange 19 is used. The screw head of the fastening means 13 presses against the circular washer 16. As the flange 19 is connected to the circular washer 16, the force from the fastening mean also affects the flange 19 and forces it towards the structure 4. The flange 19 thereby presses against the rim 15 of the circular through hole 14 of the first part 11 and thus also presses the first part 11 against the structure 4 to mount the first part 11 against the structure 4.

Before tightening the fastening means 13 to the adjustment means 12, first part 11 and the structure 4, the position of the first part 11 can be adjusted. It can be adjusted in a first way by rotating the first part 11 around the axis if the fastening means 13 or the adjustment means 12. The position of the first part 11 can also be adjusted in the height and width direction by rotating the adjustment means 12 around the fastening means 13. When the adjustment means 12 is rotated, the position of the first part 11 in relation to the structure 4 can be adjusted within a circle where the length of the long hole 17 constitutes the radius of the circle.

The first part 11 is now in intended position on the structure 4 and the other adjustment means 12 are mounted in thereto corresponding circular through hole 14 at the first part 11. Thereafter the adjustment means 12 is rotated until the drilled hole is aligned with the long hole 17 of the adjustment means 12. Thereafter the fastening means 13 is inserted into the long hole 17 of the adjustment means 12 and into the drilled hole and interact with the adjustment means 12, the first part 11 and the structure 4 to mount the first part 11 to the structure 4.

As the first part 11 is mounted to the structure 4 the other part of a door operating system 3 is mounted on the door mounting system 10. Some or all of the other parts of the door operating system 3 may however be mounted on the first part 11 also during mounting of the first part 11 and does thus not need to be mounted afterwards.

In an aspect, the fastening means 13 is inserted direct into the structure 4 without any pre drilling when mounting a door system with a door mounting system 10 to a structure 4. When inserting the fastening means 13 directly into the structure 4, the corresponding problem can occur regarding that the fastening means 13 drifters in the material when it is inserted. The first step that an installer that should use the door mounting system 10 do is to decide where and how on the structure 4 the door system should be mounted. Thereafter the adjustment means 12 is mounted in the circular through holes 14 of the first part 11. One fastening means 13 is inserted into the long hole 17 of the adjustment means 12 and into the structure 4. Before tightening the fastening means 13 to the adjustment means 12, first part 11 and the structure 4, the adjustment means 12 can be used to adjust the position of the first part 11 in view of the structure 4 in a corresponding way as when a drilled hole is used. The first part 11 can thus be adjusted to the intended position on the structure 4 even if the fastening means 13 has drifted away from the intended position when it is inserted into the structure 4. Thereafter the fastening means 13 is tightened against the adjustment means 12, first part 11 and structure 4. Thereafter the fastening means 13 is inserted into the long hole 17 of the other adjustment means 12 and into the structure 4 to mount the first part 11 to the structure 4. If the fastening means 13 drifts away from the intended position the adjustment means 12 can be rotated such that the first part 11 is mounted to the structure 4 without changing its position on the structure 4.

In an aspect, the door mounting system 10 also lowers the demands of the tolerances of the positions in which the circular through holes 14 on the first part 11 is made. This also lowers the production costs in addition to improving the adjustability of the door mounting system 10. As the first part 11 is mounted to the structure 4, the door operating system 3 is mounted on the door mounting system 10. Some or all of the other parts of the door operating system 3 may however be mounted on the first part 11 also during mounting of the first part 11 and does thus not need to be mounted afterwards. In the above, some steps of mounting a door operating system to a structure 4 with a door mounting system 10 has been described in a specific order, however, the invention is not limited to this specific order and the different steps can be performed in alternate orders and still be within the scope of the invention.

When an adjustment means 12 with a flange 19 is mounted in the circular through hole 14 the flange 19 makes contact with the rim 15 of the circular through hole 14. When the fastening means 13 presses against the circular washer 16, the flange 19 presses against the rim 15 of the through hole 14 and thus also the first part 11 against the structure 4.

The foregoing has described the principles, preferred embodiments and aspects and modes of operation of the present invention. However, the description should be regarded as illustrative rather than restrictive, and the invention should not be limited to the particular embodiments and aspects discussed above. As mentioned above, the different features of the various embodiments and aspects of the invention can be combined in other combinations than those explicitly described. It should therefore be appreciated that variations may be made in those embodiments and aspects by those skilled in the art without departing from the scope of the present invention as defined by the following claims.

## Claims

1. A door mounting system (10) for mounting a door system (1) to a structure (4), such as a wall, a ceiling or a frame, wherein the door mounting system (10) comprises
a first part (11) that is adapted to be mounted to the structure (4) and comprising at least one circular through hole (14),
at least one adjustment means (12) comprising a circular washer (16) comprising a long hole (17), wherein the outer diameter of the circular washer (16) corresponds to the inner diameter of the through hole of the first part (11), and
a fastening means (13),
wherein the circular washer (16) is rotatably mountable in the circular through hole (14) of the first part (11) and the fastening means (13) is insertable in the long hole (17) of the circular washer (16) to interact with the first part (11), the adjustment means (12) and the structure (4) to mount the door system to said structure (4),
wherein the adjustment means (12) further comprise a flange (19) that is adapted to interact with an upper rim (15) of the circular through hole (14),
wherein said flange (19) is connected to the side of the circular washer (16) that is directed away from said structure (4) when the washer is mounted in the circular through hole (14) of the first part (11), and
wherein the outer diameter of the annular flange (19) is larger than the diameter of the circular through hole (14) of the first part (11).

2. A door mounting system (10) according to claim 1, wherein the depth of the circular through hole (14) of the first part (11) is larger than the thickness of the circular washer (16).

3. A door mounting system (10) according to claim 1 or 2, wherein the flange (19) is an annular flange (19).

4. A door mounting system (10) according to any of the preceding claims, wherein the fastening means (13) is a screw (13).

5. A door mounting system (10) according to any of the preceding claims, wherein the adjustment means (12) further comprise a ring (18) and the outer diameter of the ring (18) is the same as the outer diameter of the circular washer (16).

6. A door mounting system (10) according to claim 5, wherein one end of the ring (18) is connected to the flange (19) and the other end of the ring (18) is connected to the circular washer (16).

7. A door mounting system (10) according to any of claims 5-6, wherein the depth of the circular through hole (14) of the first part (11) is larger than the thickness of the circular washer (16) and the height of the ring (18).

8. A door mounting system (10) according to any of the preceding claims, wherein the circular washer (16), the flange (19) and the ring (18) of the adjustment means (12) are integrated.

9. A door mounting system (10) according to any of the preceding claims, wherein the adjustment means (12) has a cap shape.

10. A door mounting system (10) according to any of the preceding claims, wherein the long hole (17) of the circular washer (16) has a length and a width and the length is larger than the width.

11. A door mounting system (10) according to claim 10, wherein the length of the long hole (17) is substantially the same as the radius of the circular washer (16).

12. A door mounting system (10) according to claim 10 or 11, wherein the long hole (17) extend in the radial direction of the circular washer (16) from the centre of the circular washer (16) towards the periphery of the circular washer (16).

13. A door mounting system (10) according to any of claims 4-12, wherein the width of the head of the screw (13) is larger than the width of the long hole (17).

14. A door mounting system (10) according to any of claims 5-13, wherein the height of the ring (18) of the adjustment means (12) is larger than the height of the head of the screw (13).

15. Method for mounting a door system to a structure (4), such as a wall, a ceiling or a frame, wherein the door system comprise a door mounting system (10) according to any of claims 1-14, comprising
- positioning the first part (11) at the structure (4) where it should be mounted,
- drilling a hole in the structure (4) at each through hole of the first part (11),
- mounting an adjustment means (12) in each through hole of the first part (11),
- rotating each adjustment means (12) in the through hole, such that the long hole (17) of the adjustment means (12) is aligned with the drilled hole, and
- inserting a fastening means (13) in each long hole (17) and thereto corresponding drilled hole to fastening the first part (11) to the structure (4).

16. Method for mounting a door system to a structure (4) according to claim 15, wherein the position in which the holes are drilled are marked at the structure (4) through the through hole of the first part (11).

17. Method for mounting a door system according to any of claims 15 - 16, wherein the position of the first part (11) is adjusted in relation to the structure (4) after the fastening means (13) is inserted into the long hole (17) of the first adjustment means (12) and thereto corresponding drilled hole by rotating the adjustment means (12).

18. Method for mounting a door system according to any of claims 15 - 17, wherein the position of the first part (11) is adjusted in relation to the structure (4) after the first fastening means (13) is inserted into the long hole (17) and thereto corresponding drilled hole and before a second fastening means (13) is inserted into the long hole (17) and thereto corresponding drilled hole by moving the first part (11) around said first fastening means (13).

19. Method for mounting a door system according to any of claims 15-18, wherein the number of through holes in the first part (11) is dependent on the length of the first part (11).
